# DEMANDE DE BREVET EUROPEEN

(11) **EP 4 725 305 A1**
(43) Date de publication de la demande: **15.04.2026**
(21) Numéro de dépôt: 25207349.9
(22) Date de dépôt: 07.10.2025
(51) Int. Cl.: A01K 61/55

(54) **SYSTEME POUR L ELEVAGE DE MOLLUSQUES BIVALVES A COQUILLES COMPORTANT UNE POCHE ET UN MOYEN DE FIXATION A UNE TABLE**

(30) Priorité: 08.10.2024 FR 2410860
(71) Demandeur: Cooperative Maritime des Pêcheurs et Ostréiculteurs, 56100 Lorient (FR)
(72) Inventeur: BOTTI, Romain, 56100 LORIENT (FR); ROJOT, Aymeric, 56100 LORIENT (FR); LAURENT, Yvonnick, 56100 LORIENT (FR)
(74) Mandataire: Eveillard, Sophie

(57) **Abrégé**

Système pour l'élevage d'huîtres comportant :
▪ une poche (2) destinée à contenir les mollusques bivalves à coquilles et apte à être fixée à une barre de retenue d'une table d'élevage ;
▪ un élément de maintien tubulaire (22) placé dans la poche pour permettre une attache de ladite poche à une barre de retenue d'une table d'élevage,
▪ un système de fixation (1) permettant de fixer l'élément de maintien tubulaire à la barre de retenue, ledit système de fixation comportant :
∘ une pièce (4) comprenant deux anneaux;
∘ un taquet mobile (10) adapté pour être introduit dans au moins un anneau de la pièce et destiné à être maintenu au contact dudit anneau par un lien,
∘ un lien destiné à être fixé au taquet mobile et à la barre de retenue de la table.

## Description

### Domaine de l'invention

L'invention se rapporte au domaine des systèmes de fixation des poches destinées à contenir des mollusques bivalves à coquilles pour leur élevage en mer, lesdites poches étant amarrées ou fixées à une table dite « table d'élevage » disposée en mer. Plus particulièrement, l'invention se rapporte aux systèmes permettant à la fois une fixation des dites poches tout en autorisant un mouvement contrôlé de ladite poche soumise aux marées. Ces systèmes permettent aussi une bonne préhension de ladite poche lors des manœuvres de retrait ou de fixation à la table d'élevage.

### État de la technique

Actuellement, il existe de nombreuses solutions de fixation d'une poche destinée à contenir des mollusques à coquilles pour leur élevage à une table d'élevage positionnée sur un fond marin. Ces poches sont possiblement agencées horizontalement ou verticalement.

Dans tous les cas, le détachement ou l'attachement d'une poche à une table positionnée en mer nécessite des opérations manuelles difficiles à réaliser à cause du poids des poches remplies. Il est souvent difficile pour un ostréiculteur d'avoir une bonne préhension des poches à fixer ou à détacher sur la table d'élevage.

Enfin, certaines poches sont harnachées ou fixées de telle sorte que les durées des opérations de détachement et d'attachement constituent un obstacle à la réalisation de cette action dans un temps limité et de manière répétée.

### Résumé de l'invention

Un premier objet de l'invention vise un système pour l'élevage des mollusques bivalves à coquilles comportant :
▪ une poche destinée à contenir les mollusques bivalves à coquilles et apte à être fixée à une barre de retenue d'une table d'élevage, ladite poche étant formée par un filet et comportant au moins une ouverture supérieure pour le passage d'un moyen de fixation, appelé également système de fixation ;
▪ un élément de maintien tubulaire placé dans la poche pour permettre une attache de ladite poche à une barre de retenue d'une table d'élevage,
▪ au moins un système de fixation permettant de fixer l'élément de maintien tubulaire à la barre de retenue d'une table d'élevage, ledit système de fixation comportant :
   ∘ une pièce comprenant deux anneaux comportant chacun un passage central pour le passage d'une part de l'élément de maintien tubulaire et d'autre part d'un taquet mobile;
   ∘ un taquet mobile adapté pour être introduit dans au moins un anneau de la pièce et destiné à être maintenu au contact dudit anneau par un lien, ledit taquet mobile comportant une zone centrale adaptée à former un guide d'enroulement pour le passage du lien,
   ∘ un lien destiné à être fixé d'une part au taquet mobile et d'autre part à la barre de retenue de la table d'élevage.

Un avantage est de permettre une meilleure préhension de la poche lors des opérations d'installation d'une poche sur une table d'élevage ou lors de retraits de ladite poche.

Selon une première variante du système selon l'invention, les deux anneaux de la pièce sont agencés selon deux plans perpendiculaires. Un avantage est de favoriser un mouvement de balancier de la poche selon le mouvement de la mer selon une direction transversale à la barre de retenue et de favoriser le mouvement pour extraire la poche de la table d'élevage ou agencer cette dernière sur la table d'élevage dans une direction sensiblement parallèle à la barre de retenue.

Selon une deuxième variante du système selon l'invention les deux anneaux de la pièce sont agencés selon deux plans non coplanaires.

L'invention porte aussi sur les modes de réalisation suivants. L'homme du métier comprendra que chacune des caractéristiques des modes de réalisation suivants peut être combiné indépendamment aux caractéristiques ci-dessus, et également entre elles sans pour autant constituer une généralisation intermédiaire.

Selon un premier mode de réalisation de l'invention, la pièce est une pièce monobloc en polymère. Un avantage est d'améliorer la robustesse du système de fixation.

Selon un deuxième mode de réalisation de l'invention, au moins un des anneaux de la pièce est de forme ovale ou elliptique, de préférence l'anneau traversé par le lien est de forme ovale ou elliptique.

Selon un troisième mode de réalisation de l'invention, le taquet mobile comporte au moins un guide latéral favorisant le maintien d'un lien sur ledit taquet mobile, ledit lien étant destiné à être enroulé autour de la portion centrale du taquet mobile.

Selon un quatrième mode de réalisation de l'invention, au moins un guide latéral comporte une encoche permettant l'introduction ou le retrait du lien dans le guide latéral du taquet mobile.

Selon un cinquième mode de réalisation de l'invention, le taquet mobile comporte deux guides latéraux agencés de part et d'autre de la portion centrale du taquet mobile, les deux guides formant une zone rectangulaire et étant tous deux coplanaires.

Selon un sixième mode de réalisation de l'invention, le taquet mobile comporte deux extrémités, dont au moins une présente un amincissement de son épaisseur favorisant son introduction dans un anneau de la pièce.

Selon un septième mode de réalisation de l'invention, le taquet mobile présente un profilé de section considéré transversalement à sa plus grande dimension présentant une largeur et une hauteur, la largeur maximale étant inférieure à la hauteur maximale du profilé de manière à permettre une introduction du taquet mobile dans un anneau de la pièce selon un nombre limité d'orientations du taquet mobile autour de son axe parallèle A₀ à sa plus grande dimension.

Selon un huitième mode de réalisation de l'invention, le lien est un bande souple élastique formant une boucle et ayant une section rectangulaire présentant de préférence une épaisseur inférieure à 1cm.

Selon un neuvième mode de réalisation de l'invention, le lien est en caoutchouc.

Selon un dixième mode de réalisation de l'invention, le lien est une sangle.

Selon un onzième mode de réalisation de l'invention, la poche comprend deux portions latérales, de préférence rectangulaires, formant les plus grandes surfaces de ladite poche, lesdites portions étant destinées à s'étendre dans un plan sensiblement vertical lorsque le poche est fixée à une table d'élevage, lesdites portions latérales étant mobiles autour de la barre de retenue selon un mouvement de balancier obtenu grâce à souplesse du lien.

Selon un douzième mode de réalisation, le système de l'invention comprend une réserve de flottabilité fixée de préférence sur la partie inférieure de la poche.

Selon un treizième mode de réalisation, le système de l'invention comprend deux systèmes de fixation.

Un deuxième objet de l'invention vise une table pour l'élevage des mollusques bivalves à coquilles comprenant des montants, des barres de retenue et au moins un système pour l'élevage des mollusques bivalves à coquilles selon l'invention.

La présente invention a également pour objet un système de fixation, tel que décrit précédemment, destiné à être utilisé pour l'accrochage d'une poche, comportant une pièce comprenant deux anneaux, un taquet et un lien.

### Brève description des figures

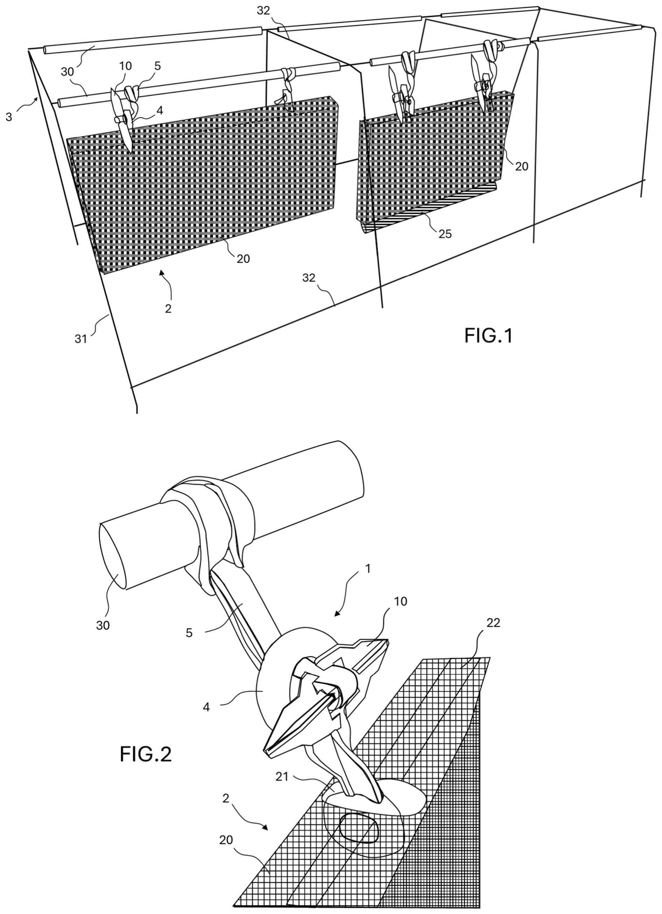

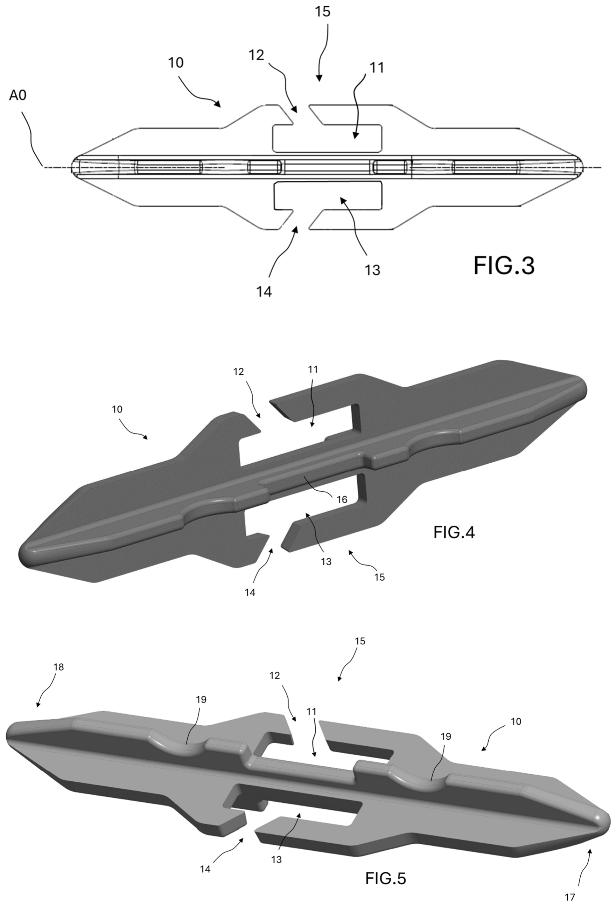

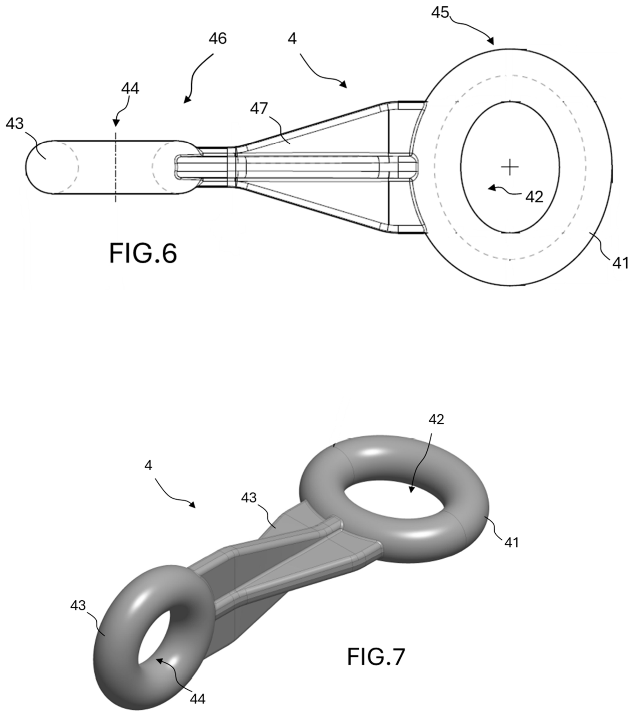

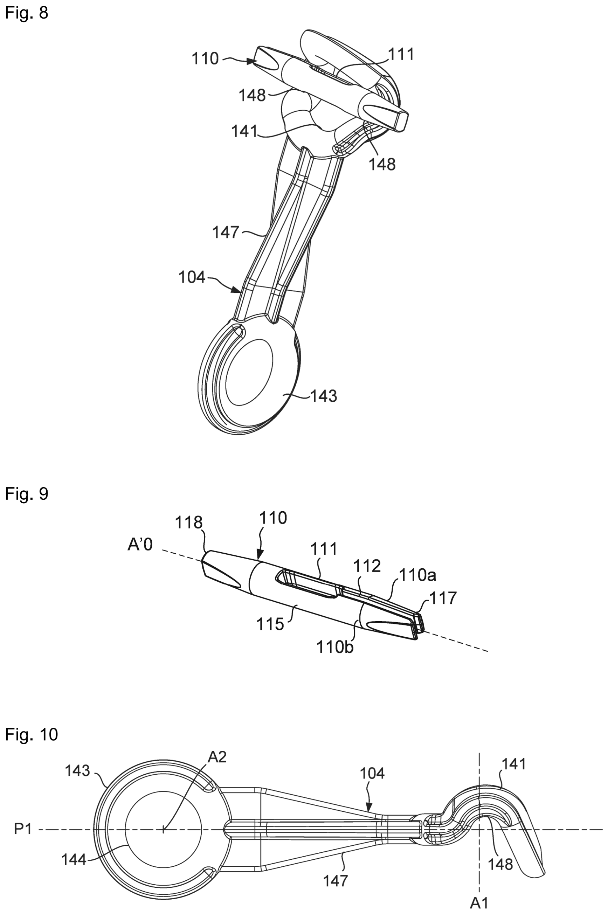

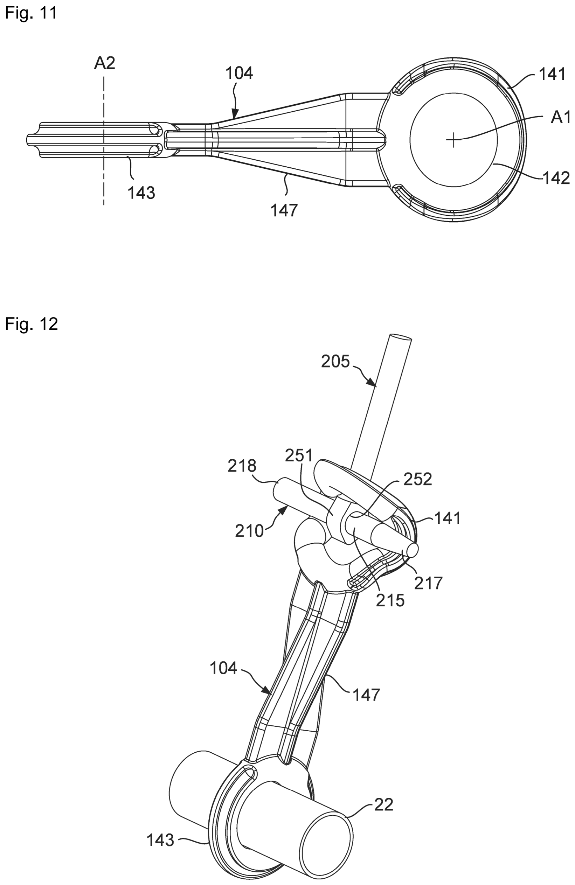

D'autres caractéristiques et avantages de l'invention ressortiront à la lecture de la description détaillée qui suit, en référence aux figures annexées, qui illustrent :
▪ [Figure 1] : un exemple de réalisation d'une fixation d'une pluralité de poches à une table d'élevage obtenue grâce au système de fixation de l'invention ;
▪ [Figure 2] : un exemple de réalisation d'une fixation d'une poche à une table d'élevage obtenue grâce au système de fixation de l'invention ;
▪ [Figure 3] : une vue de coupe d'un taquet mobile de l'invention destiné à former un élément de maintien en contact avec une pièce comprenant deux anneaux pour suspendre une poche à une table d'élevage ;
▪ [Figure 4] : une première vue en 3D d'un taquet mobile de l'invention destiné à former un élément de maintien en contact avec une pièce comprenant deux anneaux pour suspendre une poche à une table d'élevage ;
▪ [Figure 5] : une seconde vue en 3D d'un taquet mobile de l'invention destiné à former un élément de maintien en contact avec une pièce comprenant deux anneaux pour suspendre une poche à une table d'élevage ;
▪ [Figure 6] : une vue de coupe d'une pièce comprenant deux anneaux pour le passage d'un élément tubulaire et d'un taquet mobile de l'invention ;
▪ [Figure 7] : une vue en 3D d'une pièce comprenant deux anneaux pour le passage d'un élément tubulaire et d'un taquet mobile de l'invention ;
▪ [Figure 8] : une vue en perspective d'un taquet et d'une pièce de jonction à deux anneaux d'un système de fixation selon un autre mode de réalisation de l'invention ;
▪ [Figure 9] : une vue en perspective du taquet de la [Figure 8] ;
▪ [Figure 10] et [Figure 11] : deux vues de côté de la pièce de jonction de la [Figure 8] ;
▪ [Figure 12] : une vue en perspective d'un taquet, d'une pièce de jonction et d'un lien formant un système de fixation selon un autre mode de réalisation de l'invention.

Dans le présent texte, des expressions telles que « horizontal », « vertical », « partie supérieure », « partie inférieure » sont utilisées.

Lorsqu'elles se rapportent à la table d'élevage, ces expressions doivent être interprétées de façon relative, en relation avec la position normale d'une table positionnée sur le fond marin.

Lorsqu'elles se rapportent à la poche, ces expressions doivent être interprétées de façon relative, en relation avec une position de la poche suspendue à une table d'élevage, en l'absence d'eau : la partie supérieure étant au plus près de la barre de retenue 32 et la partie inférieure étant au plus près du fond marin.

On appelle « taquet mobile » : un élément de maintien destiné à être positionné en contact avec la pièce comprenant deux anneaux, ledit taquet mobile est apte à être introduit dans l'un des anneaux et positionné au contact de la pièce (plaqué contre la pièce) de sorte à ne plus repasser au travers de l'anneau sous l'effet de la contrainte qui lui est appliquée.

Le système selon l'invention comprend une « pièce comprenant deux anneaux », chaque anneau comportant un passage central.

La figure 1 représente une table d'élevage 3 avec deux poches comprenant chacune au moins un système de fixation selon l'invention. Une telle table d'élevage 3 est adaptée pour l'élevage des huitres et peut également être adaptée à d'autres mollusques bivalves à coquilles. La présente description décrit le cas particulier d'un élevage d'huîtres sans toutefois s'y restreindre.

### Table

La table d'élevage 3 de la figure 1 comporte un ensemble de montants 31, sensiblement verticaux et de barres de retenue 32, sensiblement horizontales permettant de définir une structure stable en mer. Avantageusement au moins une des barres de retenue 32 est munie d'un élément tubulaire 30. Avantageusement, la table comprend une succession de barres de retenue 32 dont au moins une est munie d'un élément tubulaire 30 permettant une fixation d'un ou de plusieurs liens 5, les éléments tubulaires 30 étant placés autour des barres de retenue 32. Les liens 5 sont préférentiellement des sangles ou des bandes. Les liens 5 pouvant être en matériau élastique tel que le caoutchouc. Un intérêt d'un tel élément tubulaire 30 est de permettre une rotation de cet élément autour d'une barre de retenue 32 de la table d'élevage 3 et de limiter l'usure dudit lien 5.

Selon un mode, non préféré, de réalisation, l'élément tubulaire 30 n'est pas présent, le lien 5 est alors directement fixé autour d'une barre de retenue 32 de la table d'élevage 3.

La figure 1 représente différents exemples de réalisation d'une fixation d'une poche 2 à la table d'élevage 3. La poche 2 à gauche au premier plan de la figure 1 comprend un système de fixation de l'invention. La poche 2 à droite comprend deux systèmes de fixation selon l'invention. Le taquet mobile 10 permet de retenir le lien 5 d'un côté de la pièce 4 en formant un contact avec ladite pièce 4 de sorte que le lien 5 qui passe par l'un des anneaux est maintenu pour permettre de suspendre la poche 2.

### Poche

La poche 2 comporte préférentiellement un filet 20 de préférence rigide ou semi-rigide, elle est apte à être utilisée, notamment suspendue, dans les conditions de l'invention sans subir de déformations. Le filet 20 comporte des ouvertures dont les dimensions permettent le passage de l'eau de mer tout en retenant les coquillages à l'intérieur de la poche.

La poche 2 peut ainsi être en suspension libre par rapport à la table d'élevage 3. Un avantage est de permettre un mouvement naturel de la poche sous l'effet des mouvements de la mer.

Selon un mode de réalisation, la poche est une structure en maille souple et/ou rigide, extrudée et/ou injecté.

### Elément de maintien tubulaire

La poche 2 est munie d'un élément de maintien tubulaire 22 agencé au niveau de la partie supérieure de la poche 2. Cet élément de maintien tubulaire 22 est maintenu au contact de la surface supérieure de la poche 2 grâce à la pièce 4 comprenant deux anneaux 41, 43 avec des passages centraux 42, 44 dont un des passages centraux 44 est destiné à recevoir l'élément de maintien tubulaire 22 positionné dans la poche. A cet effet, la pièce 4 est partiellement positionnée dans la poche 2 grâce à une ouverture 21 dans la partie supérieure de la poche 2. Un avantage est de permettre de maintenir la poche sans la déformer localement. En effet, l'élément de maintien tubulaire 22 permet de répartir les efforts sur la longueur de la surface supérieure de la poche 2.

Selon différents exemples, l'élément de maintien tubulaire 22 a une section circulaire, ovale ou polygonale.

### Réserve de flottabilité

La poche 2 peut comprendre une réserve de flottabilité 25 positionnée de préférence dans la partie inférieure de la poche 2.

Cette réserve de flottabilité, encore appelée flotteur, peut être non fermée, et se remplir alternativement d'air ou d'eau, notamment en fonction de la marée. Selon cette configuration la réserve de flottabilité peut être équipée de bouchons vissables/dévissables. La réserve de flottabilité est alors à ajustement, c'est-à-dire que son variable archimédien de flottabilité peut être ajusté, pour permettre à la poche 2 d'évoluer d'une position verticale avec ladite réserve de flottabilité 25 près du fond marin vers une position horizontale avec ladite réserve de flottabilité sensiblement à la hauteur de la barre de retenue 32 puis vers une position verticale inversée avec ladite réserve de flottabilité 25 en position la plus éloignée du fond marin.

La réserve de flottabilité permet ainsi un retournement de la poche à chaque cycle de marée. Ce retournement de la poche permet un déplacement des huîtres dans ladite poche et par conséquent un brassage des huîtres. La réserve de flottabilité permet ainsi d'éviter les opérations manuelles quotidiennes de retournement des poches généralement effectuées par les ostréiculteurs pour assurer une qualité supérieure des coquillages.

Un autre avantage du système selon la présente invention est par conséquent de permettre l'obtention d'huîtres de qualité.

La réserve de flottabilité peut être fermée. Dans ce cas elle est généralement remplie d'eau et joue alors un rôle de lest ou d'amortisseur pour éviter ou limiter les mouvements de la poche. Cette configuration est particulièrement intéressante lorsque les huîtres sont matures et qu'il faut éviter de les stresser.

Selon une configuration particulière, la réserve de flottabilité 25 est fixée sur la surface inférieure de la poche 2, par exemple sur la surface intérieure de la poche ou la surface extérieure de la poche. Selon un exemple, des lanières formant des liens passent par des ouvertures de la poche 2 et enroulent la réserve de flottabilité 25. D'autres moyens de fixation peuvent être utilisés de manière alternative.

### Système de fixation

La figure 2 représente une vue 3D d'un exemple de réalisation d'un système de fixation de l'invention. Dans cet exemple, une pièce 4 comportant un double anneau 41, 43 est utilisée pour d'une part maintenir l'élément de maintien tubulaire 22 inséré au sein de la poche 2 et d'autre part maintenir un lien 5 passant au sein d'une ouverture de la pièce 4 grâce à un taquet mobile 10 placé en opposition de l'ouverture de la pièce 4 autour duquel le lien 5 s'enroule.

La figure 2 représente un élément tubulaire 30 d'une table d'élevage 3 autour de laquelle le lien 5 est enroulé.

Le système de fixation de l'invention permet de fixer la poche 2 à la barre de retenue 32 au moyen de l'élément tubulaire 30. Dans cet objectif, le système de fixation comprend un lien 5 utilisé d'une part pour former un nœud autour de l'élément tubulaire 30 et d'autre part pour maintenir un taquet mobile 10 au contact d'une pièce 4 fixée à l'élément de maintien tubulaire 22.

La pièce 4 a un double rôle pour former la pièce de jonction entre l'élément de maintien tubulaire 22 et le taquet mobile 10 solidarisé avec le lien. Afin d'assurer ce double rôle, cette pièce 4 comporte deux anneaux 41, 43 avec chacun un passage central 42, 44. Avantageusement, la poche 2 de l'invention comporte une ouverture supérieure 21 permettant le passage de la pièce 4 à l'intérieur de la poche 2. La partie de la pièce 4 présente au sein de la poche 2 est utilisée pour le passage de l'élément de maintien tubulaire 22 dans le passage central 44 de l'anneau 43 de ladite pièce 4. La pièce 4 présente une partie à l'extérieur de la poche 2 pour le passage du taquet mobile 10 solidaire du lien 5 dans le passage central 42 de l'anneau 41. Généralement l'anneau 41, dit anneau ouvrier, présente un diamètre de taille supérieure à celui de l'anneau 43.

### Lien

Selon un exemple, le lien forme une boucle fermée. Selon un exemple de réalisation, un nœud de type tête d'alouette peut être réalisé avec le lien 5 autour de la barre de retenue 32. Selon d'autres exemples d'autres nœuds d'amarrage peuvent être réalisés avec le lien 5 autour de la barre de retenue 32, tels qu'un nœud arabesque

Selon un mode de réalisation, le lien 5 est positionné sur la barre de retenue 32, éventuellement munie d'un élément tubulaire 30, et un nœud est réalisé de sorte que le lien 5 soit fixé à la barre 32 et présente une portion manipulable pour être introduite dans un anneau de la pièce 4. Dans un second temps, le taquet mobile 10 est inséré dans la boucle formée par le lien. A cet effet, le taquet mobile 10 peut comporter une zone centrale 15 d'accueil du lien 5 afin de le positionner et le maintenir au contact du taquet mobile 10. Dans un troisième temps, le taquet mobile 10 enroulé du lien 5 peut être introduit dans le passage central 42 de l'anneau 41 de la pièce 4.

Alternativement, le lien 5 peut être d'abord passé dans l'anneau 41 de la pièce 4 et le taquet mobile 10 peut être positionné sur le lien après son passage dans le passage central 42 de l'anneau 41 de la pièce 4. Enfin le lien est positionné sur la barre de retenue 32.

Selon un premier mode, le lien 5 est un lien rigide non élastique, par exemple en toile ou en corde.

Selon un deuxième mode, le lien est en matériau élastique.

Selon un exemple de réalisation, le lien est un câble ou encore une corde élastique de type tendeur tel que celui de la marque « Sandow ».

Selon un premier exemple, le lien 5 peut être réalisé en caoutchouc naturel. Ce matériau présente une élasticité tout en offrant une bonne résistance à la déformation réversible, ainsi qu'une bonne résistance à l'usure. Enfin, ce matériau permet une capacité de déformation élastique permettant un amortissement aux chocs.

Selon un second exemple, le lien 5 peut être réalisé en caoutchouc synthétique de type copolymère du butadiène et du styrène, (« Styrene Butadiene Rubber » en langue anglaise). Ce caoutchouc présente une bonne résistance à l'abrasion et à la flexion, avec une élasticité similaire au caoutchouc naturel.

Selon un troisième exemple, le lien 5 peut être réalisé en polyuréthane. Ce matériau offre une bonne résistance à la traction et aux déchirures tout en ayant une bonne élasticité. En outre, il résiste bien à l'usure, aux intempéries et à la flexion répétée.

Selon un quatrième exemple, le lien 5 peut être réalisé en silicone qui présente une bonne élasticité et une résistance à la déformation, avec une bonne résistance thermique.

Selon un cinquième exemple, le lien 5 peut être réalisé en un élastomère thermoplastique qui peut être choisi pour des considération de recyclage.

Selon un sixième exemple, le matériau choisi pour le lien 5 peut être un caoutchouc à base de polychloroprène de type Néoprène^{®}. Un tel matériau peut offrir une bonne élasticité avec une résistance élevée aux intempéries.

### Taquet mobile

La figure 3 représente un exemple de réalisation d'un taquet mobile 10 de l'invention formant une pièce ayant une plus grande dimension selon sa longueur et s'étendant selon l'axe A0 représenté sur la figure 3. Le taquet mobile 10 comporte une largeur adaptée pour son passage au sein d'au moins un anneau 41 de la pièce 4. Selon un exemple, les dimensions transversales du taquet mobile 10 sont adaptées au passage dans l'anneau 41 qui peut être par exemple de section ovale ou circulaire.

Le taquet mobile 10 comporte préférentiellement une zone centrale 15 adaptée à retenir un lien 5. A cet effet, la zone centrale 15 comporte au moins un guide 11 de sorte que le lien 5 ne glisse pas le long du taquet mobile 10. Le guide 11 est par exemple formé d'une ouverture de forme générale rectangulaire de sorte qu'il est adapté à un lien 5 de forme d'une bande ou d'une sangle. Selon d'autres réalisations, l'ouverture du guide 11 peut avoir une forme générale circulaire ou ovale ou encore polygonale. Préférentiellement, le guide 11 comporte un côté s'étendant le long d'une portion centrale 16 suivant l'axe principal A0 du taquet mobile 10, cette portion centrale 16 étant adaptée à l'enroulement du lien 5 ayant la forme d'une bande par exemple.

Selon un mode de réalisation, l'ouverture du guide 11 comporte une encoche 12 pour le passage du lien 5 dans le guide 11 de sorte qu'il peut être inséré et retiré du guide 11 selon une manipulation particulière, notamment en suivant par exemple l'orientation de l'encoche 12. L'encoche 12 est par exemple réalisée selon un angle formant un biseau. Cet angle permet de limiter une sortie accidentelle du lien 5 en dehors du guide 11 par exemple lorsque les conditions météorologiques favorisent des mouvements aléatoires de la poche 2. En outre, l'angle permet une introduction facilitée du fait que lorsque le lien forme une bande, son introduction permet une orientation naturelle du lien dans la plus grande dimension du guide 11.

Selon un exemple de réalisation, le taquet mobile 10 comporte deux guides 11, 13 placés de part et d'autre de son axe principal A0. Selon un exemple de réalisation, les deux guides 11, 13 présentent des caractéristiques géométriques et dimensionnelles semblables ou proches. Un intérêt est de permettre de renforcer le maintien du lien 12 de manière homogène autour du taquet mobile 10. Selon un exemple, les deux guides 11 et 13 forment des ouvertures dont les surfaces respectives s'inscrivent dans un même plan. Chaque guide 11, 13 comporte une encoche respectivement 12 et 14. Selon un exemple de réalisation, les deux parties latérales de part et d'autre de l'axe A0 et s'étendant transversalement à l'axe A0 sont sensiblement planes et sont symétriques par rapport à l'axe A0. En d'autres termes un plan de coupe perpendiculaire à l'axe A0 forme une croix. Le taquet mobile 10 comporte dans ce cas de figure une extension dans la direction de sa largeur qui s'inscrit dans un plan et une extension dans la direction de sa hauteur qui s'inscrit également dans un plan. Ces deux plans étant sensiblement perpendiculaires. La présente invention ne se limite pas à une conception géométrique particulière du taquet mobile 10 qui peut être réalisé selon différentes géométries. Toutefois, l'exemple détaillé présente de nombreux avantages permettant de renforcer la fixation d'une poche sur une barre de retenue 32.

La figure 4 représente un exemple de réalisation en vue 3D dont la figure 3 est une vue de coupe. Dans cette figure, il est représenté un exemple de taquet mobile 10 dont la hauteur est plus grande que la largeur de la pièce 10. Cette configuration permet de limiter les possibilités de faire pénétrer le taquet mobile 10 au sein d'un anneau 42 de section ovale de la pièce 4. Cette conception du taquet mobile 10 et de l'anneau 42 agit comme un détrompeur qui permet à un opérateur de ne pas utiliser autrement les pièces 10 et 4.

Le taquet mobile 10 de la figure 4 présente sur sa largeur une rainure visible sur la portion centrale 16 permettant de guider également le lien 5 de sorte qu'il soit maintenu également sur cette portion du taquet mobile 10. Une telle rainure peut être présente de part et d'autre de l'axe A0. La zone centrale 16 peut avoir une symétrie par rapport à l'axe A0.

Selon un exemple de réalisation, au moins une extrémité 17 ou 18 du taquet mobile 10 peut comporter une réduction des dimensions de sa section considérée transversalement à sa plus grande dimension. Un intérêt est de présenter une extrémité qui puisse être aisément insérée au sein d'un anneau 42 de la pièce 4. Selon un exemple préféré, le taquet mobile 10 comporte deux extrémités 18, 17 présentant cette caractéristique de réduction des dimensions de leur section.

La figure 5 représente une autre vue 3D du taquet mobile 10 de l'invention. Selon un exemple, ce dernier comporte des portions de préhension 19 adaptées au contact d'un doigt. Ces portions peuvent être réparties sur chaque partie latérale du taquet mobile 10 de part et d'autre de l'axe A0 selon le plan dans lequel s'étend la largeur du taquet mobile 10. Enfin différentes portions de préhension peuvent être présentes d'un même côté du taquet mobile comme cela est représenté sur la figure 5.

### Pièce comportant deux anneaux

La figure 6 représente un exemple de réalisation de la pièce 4 comportant un double anneau 41, 43. Cette figure représente est une vue de coupe de la figure 7 représentant cette pièce en vue 3D.

Selon un mode de réalisation, la pièce 4 comprend deux anneaux 41, 43 comportant chacun un passage central 42, 44.

Selon un premier mode de réalisation, les deux anneaux 41, 43 sont coplanaires et sont réalisés dans un même plan ou dans deux plans parallèles entre eux. La pièce forme un « 8 », les anneaux du 8 étant séparés par une partie centrale 47.

Selon un second mode de réalisation, les deux anneaux 41, 43 sont réalisés dans des plans perpendiculaires entre eux. La pièce forme un « 8 vrillé » telle que représenté à la figure 7. Selon cet exemple, la partie centrale 47 de la pièce 4 est renforcée au niveau de chaque portion adjacente à un anneau 41 ou 43 de sorte que la pièce 4 soit suffisamment résistante.

Chaque anneau 41, 43 peut avoir des propriétés propres à l'objet auquel il est fixé. Par exemple, l'anneau 41 présente une forme ovale pour le passage d'un taquet mobile 10 dont la section est asymétrique selon sa largeur et sa hauteur. Selon un exemple, l'anneau 43 a une forme circulaire pour le passage d'un élément tubulaire de section circulaire tel qu'un tube de maintien 22.

Selon un exemple de réalisation, les anneaux 41, 43 forment les deux extrémités 45, 46 de la pièce 4. Ainsi, la pièce 4 comporte un anneau 43 relié à une partie centrale 47 qui est elle-même reliée à un anneau 41. D'autres conceptions sont compatibles avec l'invention dans lesquelles les anneaux ne sont pas nécessairement des extrémités de la pièce 4.

Afin d'obtenir une pièce 4 résistante et apte à supporter le poids d'une poche 2, l'anneau 41 de la pièce 4, représenté à la figure 6, est maintenu à la portion centrale 47 par un bord élargi s'étendant sur une portion d'arc de cercle de plus de 15°. Une telle conception permet de définir une pièce résistante qui ne cède pas sous la contrainte du poids et des mouvements d'une poche 2 en mouvement sous l'eau.

La figure 7 représente une conception analogue au niveau de l'autre extrémité de la pièce 4. La liaison entre la partie centrale 47 et l'anneau 43 s'étend sur un arc de cercle de l'anneau 43 de sorte à renforcer mécaniquement cette liaison. La partie centrale 47 est élargie sur l'arc de cercle en contact avec l'anneau 43. Lorsque la pièce est moulée, ces liaisons forment une liaison monobloc d'une pièce unique formée d'un même matériau. L'anneau 43 permet le passage de l'élément de maintien tubulaire 22. L'anneau 43 a donc préférentiellement une ouverture de section circulaire. Toute autre section peut être réalisée, par exemple de forme carrée lorsque la barre de retenue 32 a une section carrée.

La pièce 4 comprenant deux anneaux 41, 43 peut être avantageusement moulée par injection.

Un matériau de type polyamide peut permettre d'obtenir une bonne rigidité à la pièce 4. Il offre en outre une bonne résistance à l'usure et à l'abrasion, tout en ayant une certaine flexibilité.

Selon un autre exemple, un matériau de type polycarbonate offre une bonne résistance aux chocs. Il permet une certaine rigidité de la pièce avec une bonne capacité de déformation sous charge tout en gardant une bonne résistance mécanique.

Un autre exemple de matériau est le polyéthylène haute densité. Ce polymère semi-rigide offre une bonne résistance à la traction et une bonne résistance aux chocs.

Un autre matériau peut être choisi pour réaliser la pièce 4, tel que le polypropylène. Ce dernier est un polymère léger, rigide et flexible. Il est résistant à la fatigue.

Selon un autre exemple, un matériau de type polyuréthane peut être utilisé pour offrir une rigidité élevée ou plus de flexibilité selon les besoins. Il a l'avantage d'être résistants à l'usure tout en restant souple.

Enfin, l'acrylonitrile butadiène styrène peut être utilisé. Ce polymère robuste, rigide et résistant aux chocs offre également un bon compromis entre rigidité et flexibilité.

Un autre matériau utilisable est le polyoxyméthylène, aussi appelé acétal ou Delrin, c'est un polymère thermoplastique très rigide avec une faible friction. Il offre une bonne résistance à la fatigue.

Un autre matériau pouvant être utilisé est un élastomère thermoplastique. Ce dernier polymère est flexible et comporte une résistance mécanique intéressante.

Enfin, un matériau utilisé peut être le polycarbonate qui présente l'avantage d'obtenir une bonne tenue mécanique.

Ces matériaux peuvent être choisis en fonction des propriétés souhaitées pour réaliser également le taquet mobile.

Le système de fixation de l'invention permet un accrochage fiable et robuste d'une poche à huîtres sur une table d'élevage positionnée en mer ou dans un bassin. Un avantage de l'invention est de permettre une préhension facilitée pour un opérateur tel qu'un ostréiculteur manipulant de nombreuses poches à accrocher ou à décrocher de leur table. Le changement d'angle offert par les deux orientations des deux anneaux de la pièce 4 permet d'une part de limiter l'usure de ladite pièce lorsqu'un mouvement de balancier de la poche a lieu autour de la barre de retenue 32 et d'autre part de faciliter le retrait ou la pose de la poche latéralement c'est-à-dire en translatant la poche 2 dans la direction de la barre de retenue 32 ou un mouvement du taquet mobile 10 dans cette même direction. Ainsi la manipulation est facilitée tout en offrant une très bonne fixation de la poche.

Le système de fixation de l'invention peut également être utilisé pour l'accrochage d'une poche à une barre ou un câble monté, de préférence sensiblement horizontalement, entre deux poteaux plantés dans le sol ou munis d'embases posées au sol, la barre ou le câble étant éventuellement équipé d'un élément tubulaire 30 tel que décrit précédemment.

Les figures 8 à 11 illustrent un taquet 110 et une pièce 104 de jonction à deux anneaux selon un autre mode de réalisation de l'invention.

En référence à la figure 9, le taquet 110 se présente sous la forme d'un profilé ou tige d'axe principal A'0, de section transversale globalement circulaire, comprenant une zone centrale 115 qui est disposée entre deux extrémités 117, 118. La zone centrale, adaptée à retenir un lien, comprend un guide formé d'une ouverture 111 traversante, dont la section rectangulaire correspond à la section d'un lien, en particulier un lien tel que décrit précédemment, sous forme de boucle fermée, en matériau élastomère de type caoutchouc. Le taquet présente une fente 112 longitudinale s'étendant depuis l'ouverture 111 jusqu'à une première extrémité 117 du taquet, de manière à former deux languettes 110a, 110b élastiques. La hauteur de cette fente longitudinale, qui définit la distance entre les deux languettes, est inférieure à l'épaisseur du lien. Le lien peut être positionné dans l'ouverture 111 en l'insérant dans la fente 112 par l'extrémité 117, les deux languettes s'écartant élastiquement l'une de l'autre lors du passage du lien, puis revenant dans leur position de repos pour bloquer le lien dans l'ouverture 111. Le taquet présente une section transversale qui est sensiblement constante dans sa zone centrale 115, et qui décroit en direction d'une extrémité ou de ses deux extrémités 117, 118, ceci afin de faciliter le passage du taquet dans un anneau de la pièce. Tel que représenté sur les figures, les extrémités peuvent également présenter des biseaux pour faciliter ce passage.

En référence aux figures 8, 10 et 11, la pièce 104 de jonction comprend comme précédemment un premier anneau 141 et un second anneau 143 reliés entre eux par une partie centrale 147. Les plans principaux des anneaux sont disposés perpendiculairement entre eux, les axes principaux A1, A2 des passages centraux 142, 144 des anneaux étant perpendiculaires entre eux. Le second anneau 143 est destiné à recevoir dans son passage central 144 un élément de maintien tubulaire (non représenté) placé dans une poche. Le premier anneau 141, destiné à coopérer avec le taquet 110, présente ici une forme courbée, avec sur une première face principale deux renfoncements 148 diamétralement opposés pour la réception du taquet, tel qu'illustré à la figure 8. Le rayon de courbure des renfoncements est adapté à celui du taquet, de sorte que les portions de taquet disposées de part et d'autre de l'ouverture 111 viennent se loger dans les renfoncements. Cette configuration d'anneau permet de positionner le taquet sensiblement selon le plan médian P1 de la pièce qui est perpendiculaire à l'axe principal A1 du passage 142 central du premier anneau 141 et qui passe par l'axe principal A2 du passage 144 central du deuxième anneau 143. Ainsi, lors de l'utilisation du système de fixation, le lien assemblé au le taquet est disposé sensiblement selon ledit plan P1, et permet une meilleure reprise des efforts lors des mouvements de balancier de la poche, limitant ainsi l'usure du taquet et de la pièce de jonction.

La figure 12 illustre un système de fixation selon un autre mode de réalisation, comprenant une pièce de jonction 104 identique à celle décrite précédemment, avec un premier anneau 141 présentant des renfoncements pour la réception d'un taquet 210, et un second anneau 143 pour le passage d'un élément de maintien 22 tubulaire. Le taquet 210 se présente sous la forme d'un profilé ou tige de section transversale globalement circulaire, prévu pour être connecté ici à un lien 205. Le lien 205, illustré partiellement sur la figure 12, présente par exemple une section circulaire et comprend à une première extrémité une protubérance 251 munie d'une ouverture 252 traversante de section circulaire. Le lien est de préférence réalisé en un matériau élastomère, par exemple de type caoutchouc. Le taquet 210 présente une zone centrale 215 adaptée pour retenir le lien, en formant un guide dit d'enroulement pour le passage du lien. La zone centrale 215 du taquet présente ici une section circulaire qui est adaptée au diamètre de l'ouverture 252 du lien, de sorte que le taquet soit inséré en force dans ladite ouverture, et qu'une fois l'opération réalisée, le diamètre de la zone centrale garantisse le maintien en position du lien sur la zone centrale, et donc son positionnement ou guidage latéral sur ledit taquet. Le taquet présente une section transversale qui est sensiblement constante dans sa zone centrale 215, et qui décroit en direction d'une extrémité 217, afin de faciliter son insertion dans l'ouverture du lien, ainsi que dans l'anneau. Le lien présente une deuxième extrémité (non représentée) par laquelle ledit lien est destiné à être accroché directement ou indirectement à une barre de retenue d'une table.

## Revendications

1. **Système** pour l'élevage des mollusques à coquilles comportant :
▪ une poche (2) destinée à contenir les mollusques à coquilles et apte à être fixée à une barre de retenue (32) d'une table d'élevage (3), ladite poche (2) étant formée par un filet (20) et comportant au moins une ouverture supérieure (21) pour le passage d'un système de fixation (1) ;
▪ un élément de maintien tubulaire (22) placé dans la poche (2) pour permettre une attache de ladite poche (2) à une barre de retenue (32) d'une table d'élevage (3),
▪ au moins un système de fixation (1) permettant de fixer l'élément de maintien tubulaire (22) à la barre de retenue (32) d'une table d'élevage (3), ledit système de fixation (1) comportant :
∘ une pièce (4, 104) comprenant deux anneaux (41, 43 ; 141, 143) comportant chacun un passage central (42, 44, 142, 144) pour le passage d'une part de l'élément de maintien tubulaire (22) et d'autre part d'un taquet mobile (10, 110, 210) ;
∘ un taquet mobile (10, 110, 210) adapté pour être introduit dans au moins un anneau (41, 141) de la pièce (4, 104) et destiné à être maintenu au contact dudit anneau par un lien (5, 205), ledit taquet mobile (10, 110, 210) comportant une zone centrale (15, 115, 215) adaptée à former un guide d'enroulement pour le passage du lien (5, 205),
∘ un lien (5, 205) destiné à être fixé d'une part au taquet mobile (10, 110, 210) et d'autre part à la barre de retenue (32) de la table d'élevage (3).

2. Système selon la revendication 1 **caractérisé en ce que** les deux anneaux (41, 43 ; 141, 143) de la pièce (4, 104) sont agencés selon deux plans perpendiculaires.

3. Système selon la revendication 2, **caractérisé en ce que** l'anneau (141) traversé par le lien (5, 205) présente deux renfoncements (148) pour la réception du taquet (110, 210).

4. Système selon l'une quelconque des revendications 1 à 3 **caractérisé en ce que** la pièce (4, 104) et/ou le taquet mobile (10, 110, 210) sont chacun formé d'une pièce monobloc en polymère.

5. Système selon l'une quelconque des revendications précédentes **caractérisé en ce qu'**au moins un des anneaux de la pièce (4) est de forme ovale ou elliptique, de préférence l'anneau (41) traversé par le lien (5) est de forme ovale ou elliptique.

6. Système selon l'une quelconque des revendications précédentes **caractérisé en ce que** le taquet mobile (10, 110) comporte au moins un guide latéral (11, 13 ; 111) favorisant le maintien d'un lien (5) sur ledit taquet mobile (10, 110), ledit lien étant destiné à être enroulé autour de la zone centrale (15, 115) du taquet mobile (10, 110).

7. Système selon la revendication 6 **caractérisé en ce que** ledit au moins un guide latéral (11, 13) comporte une encoche (12, 14) permettant l'introduction ou le retrait du lien (5) dans le guide latéral du taquet mobile (10).

8. Système selon la revendication 6, **caractérisé en ce que** la zone centrale (115) présente une ouverture traversante (111) formant guide latéral, ledit taquet (110) présentant une fente longitudinale (112) permettant l'introduction ou le retrait du lien (5) de ladite ouverture traversante (111).

9. Système selon l'une quelconque des revendications précédentes **caractérisé en ce que** le lien (5) est un bande souple élastique formant une boucle et ayant une section rectangulaire présentant de préférence une épaisseur inférieure à 1cm.

10. Système selon l'une quelconque des revendications 1 à 5, **caractérisé en ce que** le taquet mobile (210) comprend une zone centrale (215) de section transversale adaptée pour le maintien d'un lien (205) après insertion en force dudit taquet par une de ses extrémités (217, 218) dans une ouverture (252) traversante formée à une extrémité libre d'un lien (205) réalisé en un matériau souple élastique.

11. Système selon la revendication 9 ou 10, **caractérisé en ce que** le lien (5, 205) est en caoutchouc.

12. Système selon l'une quelconque des revendications précédentes **caractérisé en ce que** la poche (2) comprend deux portions latérales, de préférence rectangulaires, formant les plus grandes surfaces de ladite poche (2), lesdites portions étant destinées à s'étendre dans un plan sensiblement vertical lorsque le poche est fixée à une table d'élevage (3), lesdites portions latérales étant mobiles autour de la barre de retenue (32) selon un mouvement de balancier obtenu grâce à souplesse du lien (5).

13. Système selon l'une quelconque des revendications précédentes **caractérisé en ce qu'**il comprend une réserve de flottabilité (25) fixée de préférence sur la partie inférieure de la poche (2).

14. Système selon l'une quelconque des revendications 1 à 13 **caractérisé en ce qu'**il comprend deux systèmes de fixation.

15. Table pour l'élevage des mollusques bivalves à coquilles comprenant des montants (31), des barres de retenue (32) et/ou des câble tendus entre deux montants, et au moins un système selon l'une quelconque des revendications 1 à 14.
